# EUROPEAN PATENT SPECIFICATION

(11) **EP 0 679 662 B1**
(45) Date of publication and mention of the grant of the patent: **14.07.1999**
(21) Application number: 95302686.1
(22) Date of filing: 21.04.1995
(51) Int. Cl.: C08F 4/655, C08F 10/00

(54) **Catalyst component for the polymerization of olefins**
Katalysatorbestandteil für die Olefinpolymerisation
Composant de catalyseur pour la polymérisation d'oléfines

(30) Priority: 25.04.1994 JP 12165194
(43) Date of publication of application: 02.11.1995
(73) Proprietor: NIPPON OIL CO. LTD., Minato-ku Tokyo (JP)
(72) Inventor: Aida, Fuyuki, Yokahama-shi, Kanagawa (JP); Tajima, Yoshio, Yokohama-shi, Kanagawa (JP); Matsuura, Kazuo, Yokohama-shi, Kanagawa (JP)
(74) Representative: Smaggasgale, Gillian Helen

(56) References cited:
- EP-A- 0 587 440

## Description

### [Background of the Invention]

The present invention relates to a catalyst component for use in the polymerization or copolymerization of olefins. This catalyst component is high in catalytic efficiency, contains only a small amount of a modified organoaluminum compound, affords a polymer having a high molecular weight and a relatively wide molecular weight distribution, or a copolymer having a narrow composition distribution, and permits easy control of the molecular weight and molecular weight distribution. The present invention is further concerned with a catalyst using the said catalyst component and an olefin polymer preparing process using such catalyst. The olefin polymer as referred to herein is a generic term for both homopolymer and copolymer of olefins.

As means for obtaining an ethylenic polymer or ethylene/α-olefin copolymer having a narrow molecular weight distribution and a narrow composition distribution there recently has been proposed the use of a catalyst comprising a zirconium compound and an aluminoxane (JP58-19309A).

According to a process using such proposed catalyst there is obtained an ethylene copolymer in high yield which copolymer is narrow in both molecular weight distribution and composition distribution.

However, the molecular weight of the copolymer is low and the amount of the aluminoxane used is large.

JP63-234005A proposes the use of a transition metal compound having a 2, 3 and 4-substituted cyclopentadienyl group to improve the molecular weight of the resulting polymer. In JP2-22307A it is proposed to use a hafnium compound having a ligand bonded to at least two crosslinked conjugated cycloalkadienyl groups for improving the molecular weight of the resulting polymer.

However, the use of hafnium as a transition metal is disadvantageous in that the yield of the resulting polymer is low.

One catalyst component for use in the polymerization or copolymerization of olefin(s) is described in EP-A-0587440. The catalyst is obtained by contacting the following components (1) to (4) with one another:
(1) a compound of the general formula Me'R'ₚ(OR²)_{q}X'_{4-p-q} where R' is a hydrocarbon radical having 1 to 24 carbon atoms, X' is a halogen atom, Me' is Zr, Ti or Hf, and n is 0≤n≤4;
(2) a compound of the general formula Me²R³ₘ (OR⁴)ₙX² ₘ₋ₙ where R² is a hydrocarbon radical having 1 to 24 carbon atoms, X² is a halogen atom, Me² is an element from Groups I to III in the Periodic Table, z is the valence of Me² and m is 0≤ m ≤z;
(3) an organocyclic compound having two or more conjugated double bonds; and
(4) a modified organoaluminum compound containing Al-O-Al bond and with at least one branched chain alkyl group being attached to the aluminum atom.

It is the object of the present invention to provide a catalyst component and a catalyst using the same which catalyst component and catalyst can afford an olefin polymer having a high molecular weight and a relatively wide molecular weight distribution in high yield and in an extremely small amount of a modified organoaluminum compound such as methyl aluminoxane used, as well as a polymer preparing process using the said catalyst.

### [Summary of the Invention]

The present invention relates to a catalyst component for the polymerization of olefins which catalyst component is prepared by contacting at least the following components (1), (2) and (3) with one another:
(1) a compound represented by the general formula MeRₚ(OR')_{q}X_{4-p-q} wherein R and R' are each independently a hydrocarbon group having 1 to 24 carbon atoms, X is a halogen atom, Me is Zr, Ti or Hf, p and q are each an integer in the ranges of 0 ≦ p ≦ 4 and 0 ≦ q ≦ 4, provided 0≦ p+q ≦ 4;
(2) at least one metal hydride compound selected from the group consisting of compounds represented by the following general formulas 1 to 3:

   General formula 1: MeHₘR₃₋ₘ

   General formula 2: Me'[MeHₚR_{q}(OR)_{4-p-q}]_{z}

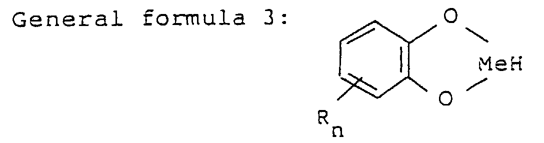

   wherein R is a hydrocarbon group having 1 to 20 carbon atoms, Me is a group IIIA element of the Periodic Table, Me' is a Group IA, IIA or IIB element in the Periodic Table of Elements, where two or more R groups exist in a molecule, they may be same or different, z is the valence of Me', and m, n, p and q are each an integer in the ranges of 1 ≦ m ≦ 3, 0 ≦ n ≦ 4, 1 ≦ p ≦ 4, 1 ≦ q ≦ 3, provided 1 ≦ p+q ≦ 4; and
(3) an organocyclic compound having two or more conjugated double bonds.

The present invention also relates to a catalyst for the polymerization of olefins, which catalyst component is prepared by contacting at least the following (1), (2), (3) and (4) with one another:
(1) a compound represented by the general formula MeRₚ(OR')_{q}X_{4-p-q} wherein R and R' are each independently a hydrocarbon group having 1 to 24 carbon atoms, X is a halogen atom, Me is Zr, Ti or Hf, p and q are each an integer in the ranges of 0 ≦ p ≦ 4 and 0 ≦ q ≦ 4, provided 0 ≦ p+q ≦ 4;
(2) at least one metal hydride compound selected from the group consisting of compounds represented by the following general formulas 1 to 3:

   General formula 1: MeHₘR₃₋ₘ

   General formula 2: Me'[MeHₚR_{q}(OR)_{4-p-q}]_{z}

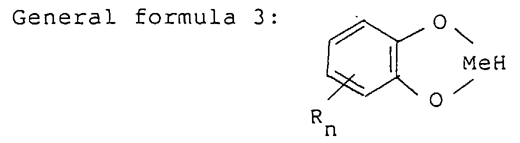

   wherein R is a hydrocarbon group having 1 to 20 carbon atoms, Me is a Group VIA element of the Periodic Table, Me' is a Group IA, IIA or IIB element in the Periodic Table of Elements, where two or more R Groups exist in a molecule, they may be same or different, z is the valence of Me', and m, n, p and q are each an integer in the ranges of 1 ≦ m ≦ 3, 0 ≦ n ≦ 4, 1 ≦ p ≦ 4, 1 ≦ q ≦ 3, provided L ≦ p+q ≦ 4 ;
(3) an organocyclic compound having two or more conjugated double bonds; and
(4) a modified organoaluminum compound containing Al-O-Al bond prepared by the reaction of an organoaluminum compound and water.

The present invention further relates to a process for preparing an olefin polymer or copolymer, characterized by polymerizing or copolymerizing olefins in the presence of the above catalyst.

The olefin polymerizing catalyst according to the present invention is high in catalytic efficiency, permits the use of a modified organoaluminum compound such as aluminoxane in a reduced amount and can afford a polymer of a high molecular weight and a relatively wide molecular weight distribution and a copolymer having a narrow composition distribution.

When the polymer prepared using the olefin polymerizing catalyst according to the present invention is subjected to molding, the resulting molded product is free of stickiness irrespective of whether the molding method is blown film extrusion or T-die extrusion, thus permitting high-speed molding. There is attained an extremely good moldability. Besides, films formed by using such polymer, irrespective of whether the molding method used is blown film extrusion or T-die extrusion, are superior in all of transparency, anti-blocking property and strength.

### [Detailed Description of the Preferred Embodiments of the Invention]

The present invention will be described in detail hereinunder.

Reference will first be made to constituent (1), namely, a compound of the general formula MeRₚ(OR')_{q}X_{4-p-q}. R and R' in this formula are each independently a hydrocarbon group having 1 to 24, preferably 1 to 12, more preferably 1 to 8, carbon atoms. As examples of such a hydrocarbon group are mentioned alkyl groups such as methyl, ethyl, propyl, isopropyl, cyclopropyl, butyl, isobutyl, tert-butyl, cyclobutyl, pentyl, isopentyl, neopentyl, cyclopentyl, hexyl, isohexyl, cyclohexyl, heptyl and octyl, alkenyl groups such as vinyl and allyl, aryl groups such as phenyl, tolyl, xylyl, mesityl, indenyl and naphthyl, and aralkyl groups such as benzyl, trityl, phenetyl, styryl, benzhydryl, phenylbutyl, phenylpropyl and neophyl. These groups may have branches. Further, in the above formula, X is a halogen atom selected from fluorine, iodine, chlorine and bromine, Me is Zr, Ti, or Hf, preferably Zr, and p and q are in the ranges of 0≦p≦4 and 0≦q≦4, provided 0≦p+q≦4, preferably 0<p+q≦4.

Suitable examples of the compound represented by the above general formula include tetramethylzirconium, tetraethylzirconium, tetrapropylzirconium, tetra-n-butylzirconium, tetrapentylzirconium, tetraphenylzirconium, tetratolylzirconium, tetrabenzylzirconium, tetraallylzirconium, tetraneophylzirconium, tetramethoxyzirconium, tetraethoxyzirconium, tetraethoxyzirconium, tetrabutoxyzirconium, tetrapentyloxyzirconium, tetraphenoxyzirconium, tetratolyloxyzirconium, tetrabenzyloxyzirconium, tetraallyloxyzirconium, tetraneophyloxyzirconium, trimethylmonochlorozirconium, triethylmonochlorozirconium, tripropylmonochlorozirconium, tri-n-butylmonochlorozirconium, tripentylmonochlorozirconium, triphenylmonochlorozirconium, tritolylmonochlorozirconium, tribenzylmonochlorozirconium, triallylmonochlorozirconium, trineophylmonochlorozirconium, dimethyldichlorozirconium, diethyldichlorozirconium, dipropyldichlorozirconium, di-n-butyldichlorozirconium, dipentyldichlorozirconium, diphenyldichlorozirconium, ditolyldichlorozirconium, dibenzyldichlorozirconium, diallyldichlorozirconium, dineophyldichlorozirconium, monomethyltrichlorozirconium, monoethyltrichlorozirconium, monopropyltrichlorozirconium, mono-n-butyltrichlorozirconium, monopentyltrichlorozirconium, monophenyltrichlorozirconium, monotolyltrichlorozirconium, monobenzyltrichlorozirconium, monoallyltrichlorozirconium, mononeophyltrichlorozirconium, tetrachlorozirconium, trimethoxymonochlorozirconium, dimethoxydichlorozirconium, monomethoxytrichlorozirconium, triethoxymonochlorozirconium, diethoxydichlorozirconium, monoethoxytrichlorozirconium, tripropoxymonochlorozirconium, dipropoxydichlorozirconium, monopropoxytrichlorozirconium, tri-n-butoxymonochlorozirconium, di-n-butoxydichlorozirconium, mono-n-butoxytrichlorozirconium, tripentyloxymonochlorozirconium, dipentyloxydichlorozirconium, monopentyloxytrichlorozirconium, triphenoxymonochlorozirconium, diphenoxydichlorozirconium, monophenoxytrichlorozirconium, tritolyloxymonochlorozirconium, ditolyloxydichlorozirconium, monotolyloxytrichlorozirconium, tribenzyloxymonochlorozirconium, dibenzyloxydichlorozirconium, monobenzyloxytrichlorozirconium, triallyloxymonochlorozirconium, diallyloxydichlorozirconium, monoallyloxytrichlorozirconium, trineophyloxymonochlorozirconium, dineophyloxydichlorozirconium, mononeophyloxytrichlorozirconium, tetrabromozirconium, trimethylmonobromozirconium, triethylmonobromozirconium, tripropylmonobromozirconium, tri-n-butylmonobromozirconium, tripentylmonobromozirconium triphenylmonobromozirconium, tritolylmonobromozirconium, tribenzylmonobromozirconium, triallylmonobromozirconium, trineophylmonobromozirconium, dimethyldibromozirconium, diethyldibromozirconium, dipropyldibromozirconium, di-n-butyldibromozirconium, dipentyldibromozirconium diphenyldibromozirconium, ditolyldibromozirconium, dibenzyldibromozirconium, diallyldibromozirconium, dineophyldibromozirconium, monomethyltribromozirconium, monoethyltribromozirconium, monopropyltribromozirconium, mono-n-butyltribromozirconium, monopentyltribromozirconium monophenyltribromozirconium, monotolyltribromozirconium, monobenzyltribromozirconium, monoallyltribromozirconium, mononeophyltribromozirconium, trimethoxymonobromozirconium, dimethoxydibromozirconium, monomethoxytribromozirconium, triethoxymonobromozirconium, diethoxydibromozirconium, monoethoxytribromozirconium, tripropoxymonobromozirconium, dipropoxydibromozirconium, monopropoxytribromozirconium, tri-n-butoxymonobromozirconium, di-n-butoxydibromozirconium, mono-n-butoxytribromozirconium, tripentyloxymonobromozirconium, dipentyloxydibromozirconium, monopentyloxytribromozirconium, triphenoxymonobromozirconium, diphenoxydibromozirconium, monophenoxytribromozirconium, tritolyloxymonobromozirconium, ditolyloxydibromozirconium, monotolyloxytribromozirconium, tribenzyloxymonobromozirconium, dibenzyloxydibromozirconium, monobenzyloxytribromozirconium, triallyloxymonobromozirconium, diallyloxydibromozirconium, monoallyloxytribromozirconium, trineophyloxymonobromozirconium, dineophyloxydibromozirconium, mononeophyloxytribromozirconium, tetraiodozirconium, trimethylmonoiodozirconium, triethylmonoiodozirconium, tripropylmonoiodozirconium, tri-n-butylmonoiodozirconium, tripentylmonoiodozirconium triphenylmonoiodozirconium, tritolylmonoiodozirconium, tribenzylmonoiodozirconium, triallylmonoiodozirconium, trineophylmonoiodozirconium, dimethyldiiodozirconium, diethyldiiodozirconium, dipropyldiiodozirconium, di-n-butyldiiodozirconium, dipentyldiiodozirconium diphenyldiiodozirconium, ditolyldiiodozirconium, dibenzyldiiodozirconium, diallyldiiodozirconium, dineophyldiiodozirconium, monomethyltriiodozirconium, monoethyltriiodozirconium, monopropyltriiodozirconium, mono-n-butyltriiodozirconium, monopentyltriiodozirconium monophenyltriiodozirconium, monotolyltriiodozirconium, monobenzyltriiodozirconium, trimethoxymonoiodozirconium, dimethoxydiiodozirconium, monomethoxytriiodozirconium, triethoxymonoiodozirconium, diethoxydiiodozirconium, monoethoxytriiodozirconium, tripropoxymonoiodozirconium, dipropoxydiiodozirconium, monopropoxytriiodozirconium, tri-n-butoxymonoiodozirconium, di-n-butoxydiiodozirconium, mono-n-butoxytriiodozirconium, tripentyloxymonoiodozirconium, dipentyloxydiiodozirconium, monopentyloxytriiodozirconium, triphenoxymonoiodozirconium, diphenoxydiiodozirconium, monophenoxytriiodozirconium, tritolyloxymonoiodozirconium, ditolyloxydiiodozirconium, monotolyloxytriiodozirconium, tribenzyloxymonoiodozirconium, dibenzyloxydiiodozirconium, monobenzyloxytriiodozirconium, triallyloxymonoiodozirconium, diallyloxydiiodozirconium, monoallyloxytriiodozirconium, trineophyloxymonoiodozirconium, dineophyloxydiiodozirconium, mononeophyloxytriiodozirconium, tribenzylmonomethoxyzirconium, tribenzylmonoethoxyzirconium, tribenzylmonopropoxyzirconium, tribenzylmonobutoxyzirconium, tribenzylmonopentyloxyzirconium, tribenzylmonophenoxyzirconium, tribenzylmonotolyloxyzirconium, tribenzylmonobenzyloxyzirconium tribenzylmonoallyloxyzirconium, tribenzylmononeophyloxyzirconium, dibenzyldimethoxyzirconium, dibenzyldiethoxyzirconium, dibenzyldipropoxyzirconium, dibenzyldibutoxyzirconium, dibenzyldipentyloxyzirconium, dibenzyldiphenoxyzirconium, dibenzylditolyloxyzirconium, dibenzyldibenzyloxyzirconium, dibenzyldiallyloxyzirconium, dibenzyldineophyloxyzirconium, monobenzyltrimethoxyzirconium, monobenzyltriethoxyzirconium, monobenzyltripropoxyzirconium, monobenzyltributoxyzirconium, monobenzyltripentyloxyzirconium, monobenzyltriphenoxyzirconium, monobenzyltritolyloxyzirconium, monobenzyltribenzyloxyzirconium monobenzyltriallyloxyzirconium, monobenzyltrineophyloxyzirconium, trineophylmonomethoxyzirconium, trineophylmonoethoxyzirconium, trineophylmonopropoxyzirconium, trineophylmonobutoxyzirconium, trineophylmonophenoxyzirconium, dineophyldimethoxyzirconium, dineophyldiethoxyzirconium, dineophyldipropoxyzirconium, dineophyldibutoxyzirconium, dineophyldiphenoxyzirconium, mononeophyltrimethoxyzirconium, mononeophyltriethoxyzirconium, mononeophyltripropoxyzirconium, mononeophyltributoxyzirconium, mononeophyltriphenoxyzirconium, tetraethyltitanium, tetrapropyltitanium, tetra-n-butyltitanium, tetrapentyltitanium, tetraphenyltitanium, tetratolyltitanium, tetrabenzyltitanium, tetraallyltitanium, tetraneophyltitanium, tetramethoxytitanium, tetraethoxytitanium, tetrapropoxytitanium, tetrabutoxytitanium, tetrapentyloxytitanium, tetraphenoxytitanium, tetratolyloxytitanium, tetrabenzyloxytitanium, tetraallyloxytitanium, tetraneophyloxytitanium, trimethylmonochlorotitanium, triethylmonochlorotitanium, tripropylmonchlorotitanium, tri-n-butylmonochlorotitanium, tribenzylmonochlorotitanium, dimethyldichlorotitanium, diethyldichlorotitanium, di-n-butyldichlorotitanium, dibenzyldichlorotitanium, monomethyltrichlorotitanium, monoethyltrichlorotitanium, mono-n-butyltrichlorotitanium, monobenzyltrichlorotitanium, tetrachlorotitanium, trimethoxymonochlorotitanium, dimethoxydichlorotitanium, monomethoxytrichlorotitanium, trimethoxymonochlorotitanium, diethoxydichlorotitanium, monoethoxytrichlorotitanium, tripropoxymonochlorotitanium, dipropoxydichlorotitanium, monopropoxytrichlorotitanium, tri-n-butoxymonochlorotitanium, di-n-butoxydichlorotitanium, mono-n-butoxytrichlorotitanium, tripentyloxymonochlorotitanium, dipentyloxydichlorotitanium, monopentyloxytrichlorotitanium, triphenoxymonochlorotitanium, diphenoxydichlorotitanium, monophenoxytrichlorotitanium, tritolyloxymonochlorotitanium, ditolyloxydichlorotitanium, monotolyloxytrichlorotitanium, tribenzyloxymonochlorotitanium, dibenzyloxydichlorotitanium, monobenzyloxytrichlorotitanium, tetrabromotitanium, trimethylmonobromotitanium, triethylmonobromotitanium, tripropylmonobromotitanium, tri-n-butylmonobromotitanium, tribenzylmonobromotitanium, dimethyldibromotitanium, diethyldibromotitanium, di-n-butyldibromotitanium, dibenzyldibromotitanium, monomethyltribromotitanium, monoethyltribromotitanium, mono-n-butyltribromotitanium, monobenzyltribromotanium, trimethoxymonobromotitanium, dimethoxydibromotitanium, monomethoxytribromotitanium, triethoxymonobromotitanium, diethoxydibromotitanium, monoethoxytribromotitanium, tripropoxymonobromotitanium, dipropoxydibromotitanium, monopropoxytribromotitanium, tri-n-butoxymonobromotitanium, di-n-butoxydibromotitanium, mono-n-butoxytribromotitanium, tripentyloxymonobromotitanium, dipentyloxydibromotitanium, monopentyloxytribromotitanium, triphenoxymonobromotitanium, diphenoxydibromotitanium, monophenoxytribromotitanium, tritolyloxymonobromotitanium, ditolyloxydibromotitanium, monotolyloxytribromotitanium, tribenzyloxymonobromotitanium, dibenzyloxydibromotitanium, monobenzyloxytribromotitanium, tetraiodotitanium, trimethylmonoiodotitanium, triethylmonoiodotitanium, tripropylmonoiodotitanium, tri-n-butylmonoiodotitanium, tribenzylmonoiodotitanium, dimethyldiiodotitanium, diethyldiiodotitanium, di-n-butyldiiodotitanium, dibenzyldiiodotitanium, monomethyltriiodotitanium, monoethyltriiodotitanium, mono-n-butyltriiodotitanium, monobenzyltriiodotitanium, trimethoxymonoiodotitanium, dimethoxydiiodotitanium, monomethoxytriiodotitanium, triethoxymonoiodotitanium, diethoxydiiodotitanium, monoethoxytriiodotitanium, tripropoxymonoiodotitanium, dipropoxydiiodotitanium, monopropoxytriiodotitanium, tri-n-butoxymonoiodotitanium, di-n-butoxydiiodotitanium, mono-n-butoxytriiodotitanium, tripentyloxymonoiodotitanium, dipentyloxydiiodotitanium, monopentyloxytriiodotitanium, triphenoxymonoiodotitanium, diphenoxydiiodotitanium, monophenoxytriiodotitanium, tritolyloxymonoiodotitanium, ditolyloxydiiodotitanium, monotolyloxytriiodotitanium, tribenzyloxymonoiodotitanium, dibenzyloxydiiodotitanium, monobenzyloxytriiodotitanium, tribenzylmonomethoxytitanium, tribenzylmonoethoxytitanium, tribenzylmonopropoxytitanium, tribenzylmonobutoxytitanium, tribenzylmonophenoxytitanium, dibenzyldimethoxytitanium, dibenzyldiethoxytitanium, dibenzyldipropoxytitanium, dibenzyldibutoxytitanium, dibenzyldiphenoxytitanium, monobenzyltrimethoxytitanium, monobenzyltriethoxytitanium, monobenzyltripropoxytitanium, monobenzyltributoxytitanium, monobenzyltriphenoxytitanium, trineophylmonomethoxytitanium, trineophylmonoethoxytitanium, trineophylmonopropoxytitanium, trineophylmonobutoxytitanium, trineophylmonophenoxytitanium, dineophyldimethoxytitanium, dineophyldiethoxytitanium, dineophyldipropoxytitanium, dineophyldibutoxytitanium, dineophyldiphenoxytitanium, mononeophyltrimethoxytitanium, mononeophyltriethoxytitanium, mononeophyltripropoxytitanium, mononeophyltributoxytitanium, mononeophyltriphenoxytitanium, tetramethylhafnium, tetraethylhafnium, tetrapropylhafnium, tetra-n-butylhafnium, tetrapentylhafnium, tetraphenylhafnium, tetratolylhafnium, tetrabenzylhafnium, tetraallylhafnium, tetraneophylhafnium, tetramethoxyhafnium, tetraethoxyhafnium, tetrapropoxyhafnium, tetrabutoxyhafnium, tetrapentyloxyhafnium, tetraphenoxyhafnium, tetratolyloxyhafnium, tetrabenzyloxyhafnium, tetraallyloxyhafnium, tetraneophyloxyhafnium, trimethylmonochlorohafnium, triethylmonochlorohafnium, tripropylmonchlorohafnium, tri-n-butylmonochlorohafnium, tribenzylmonochlorohafnium, dimethyldichlorohafnium, diethyldichlorohafnium, di-n-butyldichlorohafnium, dibenzyldichlorohafnium, monomethyltrichlorohafnium, monoethyltrichlorohafnium, mono-n-butyltrichlorohafnium, monobenzyltrichlorohafnium, tetrachlorohafnium, trimethoxymonochlorohafnium, dimethoxydichlorohafnium, monomethoxytrichlorohafnium, triethoxymonochlorohafnium, diethoxydichlorohafnium, monoethoxytrichlorohafnium, tripropoxymonochlorohafnium, dipropoxydichlorohafnium, monopropoxytrichlorohafnium, tri-n-butoxymonochlorohafnium, di-n-butoxydichlorohafnium, mono-n-butoxytrichlorohafnium, tripentyloxymonochlorohafnium, dipentyloxydichlorohafnium, monopentyloxytrichlorohafnium, triphenoxymonochlorohafnium, diphenoxydichlorohafnium, monophenoxytrichlorohafnium, tritolyloxymonochlorohafnium, ditolyloxydichlorohafnium, monotolyloxytrichlorohafnium, tribenzyloxymonochlorohafnium, dibenzyloxydichlorohafnium, monobenzyloxytrichlorohafnium, tetrabromohafnium, trimethylmonobromohafnium, triethylmonobromohafnium, tripropylmonobromohafnium, tri-n-butylmonobromohafnium, tribenzylmonobromohafnium, dimethyldibromohafnium, diethyldibromohafnium, di-n-butyldibromohafnium, dibenzyldibromohafnium, monomethyltribromohafnium, monoethyltribromohafnium, mono-n-butyltribromohafnium, monobenzyltribromohafnium, trimethoxymonobromohafnium, dimethoxydibromohafnium, monomethoxytribromohafnium, triethoxymonobromohafnium, diethoxydibromohafnium, monoethoxytribromohafnium, tripropoxymonobromohafnium, dipropoxydibromohafnium, monopropoxytribromohafnium, tri-n-butoxymonobromohafnium, di-n-butoxydibromohafnium, mono-n-butoxytribromohafnium, tripentyloxymonobromohafnium, dipentyloxydibromohafnium, monopentyloxytribromohafnium, triphenoxymonobromohafnium, diphenoxydibromohafnium, monophenoxytribromohafnium, tritolyloxymonobromohafnium, ditolyloxydibromohafnium, monotolyloxytribromohafnium, tribenzyloxymonobromohafnium, dibenzyloxydibromohafnium, monobenzyloxytribromohafnium, tetraiodohafnium, trimethylmonoiodohafnium, triethylmonoiodohafnium, tripropylmonoiodohafnium, tri-n-butylmonoiodohafnium, tribenzylmonoiodohafnium, dimethyldiiodohafnium, diethyldiiodohafnium, di-n-butyldiiodohafnium, dibenzyldiiodohafnium, monomethyltriiodohafnium, monoethyltriiodohafnium, mono-n-butyltriiodohafnium, monobenzyltriiodohafnium, trimethoxymonoiodohafnium, dimethoxydiiodohafnium, monomethoxytriiodohafnium, triethoxymonoiodohafnium, diethoxydiiodohafnium, monoethoxytriiodohafnium, tripropoxymonoiodohafnium, dipropoxydiiodohafnium, monopropoxytriiodohafnium, tri-n-butoxymonoiodohafnium, di-n-butoxydiiodohafnium, mono-n-butoxytriiodohafnium, tripentyloxymonoiodohafnium, dipentyloxydiiodohafnium, monopentyloxytriiodohafnium, triphenoxymonoiodohafnium, diphenoxydiiodohafnium, monophenoxytriiodohafnium, tritolyloxymonoiodohafnium, ditolyloxydiiodohafnium, monotolyloxytriiodohafnium, tribenzyloxymonoiodohafnium, dibenzyloxydiiodohafnium, monobenzyloxytriiodohafnium, tribenzylmonomethoxyhafnium, tribenzylmonoethoxyhafnium, tribenzylmonopropoxyhafnium, tribenzylmonobutoxyhafnium, tribenzylmonophenoxyhafnium, dibenzyldimethoxyhafnium, dibenzyldiethoxyhafnium, dibenzyldipropoxyhafnium, dibenzyldibutoxyhafnium, dibenzyldiphenoxyhafnium, monobenzyltrimethoxyhafnium, monobenzyltriethoxyhafnium, monobenzyltripropoxyhafnium, monobenzyltributoxyhafnium, monobenzyltriphenoxyhafnium, trineophylmonomethoxyhafnium, trineophylmonoethoxyhafnium, trineophylmonopropoxyhafnium, trineophylmonobutoxyhafnium, trineophylmonophenoxyhafnium, dineophyldimethoxyhafnium, dineophyldiethoxyhafnium, dineophyldipropoxyhafnium, dineophyldibutoxyhafnium, dineophyldiphenoxyhafnium, mononeophyltrimethoxyhafnium, mononeophyltriethoxyhafnium, mononeophyltripropoxyhafnium, mononeophyltributoxyhafnium, and mononeophyltriphenoxyhafnium.

It goes without saying that in the compounds referred to above as examples of the above component (1) there is included not only the case where R and R' in the general formula concerned are n- groups but also the case where they are isomeric groups of various structures such as iso-, s-, t- and neo-.

Among the compounds exemplified above, tetramethylzirconium, tetraethylzirconium, tetrabenzylzirconium, tetrapropoxyzirconium, tripropoxymonochlorozirconium, tetrabutoxyzirconium, tetrabutoxytitanium and tetrabutoxyhafnium are preferred. Particularly preferred are the compounds represented by the formula Zr(OR)₄, including tetrapropoxyzirconium and tetrabutoxyzirconium.
These compounds may be used as a mixture of two or more.

The following description is now provided about component (2). The component (2) used in the present invention is at least one compound selected from the group consisting of the compounds represented by the following general formulas 1 to 3:

General formula 1: MeHₘR₃₋ₘ

General formula 2: Me'[MeHₚR_{q}(OR)_{4-p-q}]_{z}

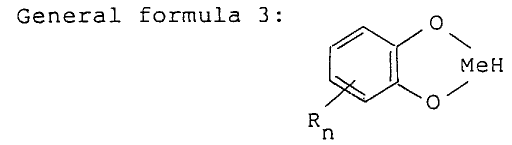

In the above formulas, Me is a Group IIIA element in the Periodic Table such as boron and aluminum. Me' is a Group IA, IIA or IIB element such as lithium, sodium, potassium, magnesium, calcium and barium, as well as zinc.

R is a hydrocarbon group having 1 to 20 carbon atoms. Examples include alkyl groups such as methyl, ethyl, propyl, isopropyl, cyclopropyl, butyl, isobutyl, t-butyl, pentyl, isopentyl, neopentyl, cyclopentyl, hexyl, isohexyl, cyclohexyl, heptyl, octyl, decyl and dodecyl, alkenyl groups such as vinyl and allyl, aryl groups such as phenyl, tolyl, xylyl, mesityl, indenyl and naphthyl, and aralkyl groups such as benzyl, trityl, phenethyl, styryl, benzhydryl, phenylbutyl, phenylpropyl and neophyl. These hydrocarbon groups may have branches, and in the case where two or more R groups are present in one molecule, they may be the same or different; z is the valence of Me'; m is 1 ≦ m ≦ 3; n is 0 ≦ n ≦ 4, preferably 0 ≦ n ≦ 2, more preferably 0 ≦ n ≦ 1 most preferably n=0; p and q are 1 ≦ p ≦ 4, 0 ≦ q ≦ 3, provided 1 ≦ p+q ≦ 4. In the general formula 2, when Me is boron, Me' is preferably sodium, lithium or zinc, and when Me is aluminum, Me' is preferably sodium, lithium or potassium. In the general formula 3, the substituent position of R is not specially limited. For example, with n=2, its substituent position is the 4,5-position, 4,6-position, or 5- or 6-position, and with n=1, it is the 4- or 5-position.

Examples of component (2) include aluminum hydride, dimethylaluminum hydride, diethylaluminum hydride, dipropylaluminum hydride, di-iso-propylaluminum hydride, dibutylaluminum hydride, di-iso-butylaluminum hydride, dihexylaluminum hydride, dicyclohexylaluminum hydride, lithium aluminum hydride, sodium aluminum hydride, lithium aluminum trimethoxy hydride, sodium aluminum trimethoxy hydride, lithium aluminum triethoxy hydride, sodium aluminum triethoxy hydride, lithium aluminum tri-tert-butoxy hydride, sodium aluminum tri-tert-butoxy hydride, borane, diborane, 2,3-dimethyl-2-butylborane, bis(3-methyl-2-butyl)borane, dicyclohexylborane, diisopinocamphenylborane, 9-borabicyclo[3,3,1]nonane, catecholborane, lithium borohydride, sodium borohydride, zinc borohydride, magnesium borohydride, calcium borohydride, barium borohydride, lithium triethyl borohydride, lithium tri-iso-butyl borohydride, potassium tri-iso-butyl borohydride, sodium cyano borohydride, potassium cyano borohydride, catecholborane(1,3,2-benzodioxaboral), 4-methyl-1,3,2-benzodioxaboral, 5-methyl-1,3,2-benzodioxaboral, 4,5-dimethyl-1,3,2-benzodioxaboral, 4,6-dimethyl-1,3,2-benzodioxaboral, 4,7-dimethyl-1,3,2-benzodioxaboral, 4-ethyl-1,3,2-benzodioxaboral, 5-ethyl-1,3,2-benzodioxaboral, 4,5-diethyl-1,3,2-benzodioxaboral, 4,6-diethyl-1,3,2-benzodioxaboral, 4,7-diethyl-1,3,2-benzodioxaboral, 4-propyl-1,3,2-benzodioxaboral, 5-propyl-1,3,2-benzodioxaboral, 4,5-dipropyl-1,3,2-benzodioxaboral, 4,6-dipropyl-1,3,2-benzodioxaboral 4,7-dipropyl-1,3,2-benzodioxaboral, 4,5,6-trimethyl-1,3,2-benzodioxaboral, 4,5,7-trimethyl-1,3,2-benzodioxaboral, and 4,5,6,7-tetramethyl-1,3,2-benzodioxaboral.

Particularly preferred are aluminum hydride, dimethylaluminum hydride, diethylaluminum hydride, di-iso-butylaluminum hydride, lithium aluminum hydride, lithium aluminum trimethoxy hydride, sodium borohydride, lithium tri-iso-butyl borohydride and potassium tri-iso-butyl borohydride.

These compounds may be used in combination. Preferred combinations are di-iso-butylaluminum hydride and sodium borohydride, di-iso-butylaluminum hydride and lithium aluminum hydride, lithium aluminum triethoxyhydride and sodium borohydride, and lithium aluminum triethoxyhydride and lithium aluminum hydride.

As component (3) there is used an organocyclic compound having two or more conjugated double bonds. As examples of component (3) are included cyclic hydrocarbons having two or more, preferably 2 to 4, more preferably 2 to 3 conjugated double bonds, and having a total number of carbon atoms of 4 to 24, preferably 4 to 12, preferably cyclic hydrocarbons having one or more rings and a total number of carbon atoms of 4 to 24, preferably 4 to 12, the said rings each having two or more, preferably 2 to 4, more preferably 2 to 3, conjugated double bonds; cyclic hydrocarbons resulting from partial substitution of the above cyclic hydrocarbons with one to six hydrocarbon groups (typically an alkyl or aralkyl group of 1 to 12 carbon atoms); organosilicon compounds containing a cyclic hydrocarbon group having two or more, preferably 2 to 4, more preferably 2 to 3, conjugated double bonds, and a total number of carbon atoms of 4 to 24, preferably 4 to 12; organosilicon compounds resulting from partial substitution of the above cyclic hydrocarbon groups with one to six hydrocarbon residues; and alkali metal salts (e.g. sodium salts and lithium salts) of these compounds. Particularly preferred are those in which the cyclic hydrocarbon compound is a compound having a substituted or unsubstituted cyclopentadienyl or indenyl group.

The organosilicon compounds having a cyclic hydrocarbon group can be represented by the following general formula:

A_{L}SiR_{4-L}

where A represents the foregoing cyclic hydrocarbon group exemplified by cyclopentadienyl, substituted cyclopentadienyl, indenyl and substituted indenyl, R is a hydrocarbon residue having 1 to 24, preferably 1 to 12, carbon atoms, examples of which are such alkyl groups as methyl, ethyl, propyl, isopropyl, butyl, t-butyl, hexyl and octyl, such alkoxy groups as methoxy, ethoxy, propoxy and butoxy, such an aryl group as phenyl, such an aryloxy group as phenoxy, and such an aralkyl group as benzyl, or hydrogen, and L is 1≦L≦4, preferably 1≦L≦3.

Concrete examples of organocyclic hydrocarbons employable as component (3) include cyclopolyenes or substituted cyclopolyenes having 7 to 24 carbon atoms such as cyclopentadiene, methylcyclopentadiene, ethylcyclopentadiene, t-butylcyclopentadiene, hexylcyclopentadiene, octylcyclopentadiene, 1,2-dimethylcyclopentadiene, 1,3-dimethylcyclopentadiene, 1,2,4-trimethylcyclopentadiene, 1,2,3,4-tetramethylcyclopentadiene, pentamethylcyclopentadiene, indene, 4-methyl-1-indene, 4,7-dimethylindene, 4,5,6,7-tetrahydroindene, cycloheptatriene, methylcycloheptatriene, cyclooctatetraene, methylcyclooctatetraene, azulene, methylazulene, ethylazulene, fluorene, and methylfluorene, as well as monocyclopentadienylsilane, biscyclopentadienylsilane, tricyclopentadienylsilane, tetracyclopentadienylsilane, monocyclopentadienylmonomethylsilane, monocyclopentadienylmonoethylsilane, monocyclopentadienyldimethylsilane, monocyclopentadienyldiethylsilane, monocyclopentadienyltrimethylsilane, monocyclopentadienyltriethylsilane, monocyclopentadienylmonomethoxysilane, monocyclopentadienylmonoethoxysilane, monocyclopentadienylmonophenoxysilane, biscyclopentadienylmonomethylsilane, biscyclopentadienylmonoethylsilane, biscyclopentadienyldimethylsilane, biscyclopentadienyldiethylsilane, biscyclopentadienylmethylethylsilane, biscyclopentadienyldipropylsilane, biscyclopentadienylethylpropylsilane, biscyclopentadienyldiphenylsilane, biscyclopentadienyldiphenylmethylsilane, biscyclopentadienylmonomethoxysilane, biscyclopentadienylmonoethoxysilane, triscyclopentadienylmonomethylsilane, triscyclopentadienylmonoethylsilane, triscyclopentadienylmonomethoxysilane, triscyclopentadienylmonoethoxysilane, 3-methylcyclopentadienylsilane, bis-3-methylcyclopentadienylsilane, 3-methylcyclopentadienylmethylsilane, 1,2-dimethylcyclopentadienylsilane, 1,3-dimethylcyclopentadienylsilane, 1,2,4-trimethylcyclopentadienylsilane, 1,2,3,4-tetramethylcyclopentadienylsilane, pentamethylcyclopentadienylsilane, monoindenylsilane, bisindenylsilane, trisindenylsilane, tetrakisindenylsilane, monoindenylmonomethylsilane, monoindenylmonoethylsilane, monoindenyldimethylsilane, monoindenyldiethylsilane, monoindenyltrimethylsilane, monoindenyltriethylsilane, monoindenylmonomethoxysilane, monoindenylmonoethoxysilane, monoindenylmonophenoxysilane, bisindenylmonomethylsilane, bisindenylmonoethylsilane, bisindenyldimethylsilane, bisindenyldiethylsilane, bisindenylmethylethylsilane, bisindenyldipropylsilane, bisindenylethylpropylsilane, bisindenylphenylsilane, bisindenylphenylmethylsilane, bisindenylmonomethoxysilane, bisindenylmonoethoxysilane, trisindenylmonomethylsilane, trisindenylmonoethylsilane, trisindenylmonomethoxysilane, trisindenylmonoethoxysilane, 3-methylindenylsilane, bis-3-methylindenylsilane, 3-methylindenylmethylsilane, 1,2-dimethylindenylsilane, 1,3-dimethylindenylsilane, 1,2,4-trimethylindenylsilane, 1,2,3,4-tetramethylindenylsilane, and pentamethylindenylsilane.

Compounds with any of the above compounds bonded through an alkylene group (usually having 2 to 8, preferably 2 to 3, carbon atoms) are also employable as constituent (3) in the present invention. Examples of such compounds include bisindenylethane, bis(4,5,6,7-tetrahydro-1-indenyl) ethane, 1,3-propanedinylbisindene, 1,3-propanedinylbis (4,5,6,7-tetrahydro)indene, propylenebis(1-indene), isopropyl(1-indenyl)cyclopentadiene, diphenylmethylene(9-fluorenyl)cyclopentadiene, isopropylcyclopentadienyl-1-fluoreneisopropylbiscyclopentadiene.

The catalyst component of the present invention is prepared by contacting the following three constituents with one another: (1) a compound of the general formula MeRₚ(OR')_{q}X_{4-p-q} [constituent (1)], (2) at least one metal hydride compound selected from the following general formulas:

General formula 1: MeHₘR₃₋ₘ

General formula 2: Me' [MeHₚR_{q}(OR)_{4-p-q}]_{z}

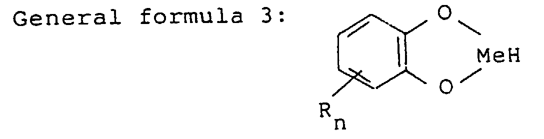

[constituent (2)], and (3) a cyclic organocompound having two or more conjugated double bonds.

These three constituents are mutually contacted at a ratio such that for one mole of constituent (1), the proportion of constituent (2) is usually in the range from 0.01 to 1,000 mols, preferably 0.1 to 100 mols, more preferably 0.5 to 50 mols, and the proportion of constituent (3) is in the range from 0.01 to 1,000 mols, preferably 0.1 to 100 mols, more preferably 0.5 to 50 mols.

It is optional in what order the constituents (1) to (3) are to be contacted with one another. For example, they may be contacted in any of the following orders. (2) is added to (1), then (3) is added. (3) is added to (1), then (2) is added. (1) is added to (2), then (3) is added. (3) is added to (2), then (1) is added. (1) is added to (3), then (2) is added. (2) is added to (3), then (1) is added. (1) to (3) are contacted at a time. Particularly preferred are the method wherein (3) is added to (1), then (2) is added, and the method wherein (1) is added to (3), then (2) is added.

It is also optional under what conditions the three constituents are to be contacted with one another. But it is preferred that the constituents (1), (2) and (3) be contacted together in an inert atmosphere such as a nitrogen or argon atmosphere and in the presence of an inert hydrocarbon solvent such as heptane, hexane, benzene, toluene, or xylene. This contact reaction is carried out at a temperature usually in the range of -100°C to 200°C, preferably -50°C to 100°C, for 30 minutes to 50 hours, preferably 2 to 24 hours. In the case where the constituents are contacted in an inert hydrocarbon solvent, the resulting catalyst component can be subjected to polymerization as it is together with the solvent. Or the resulting catalyst component may be once withdrawn as a solid catalyst component by using such means of precipitation and drying and then used in the polymerization. Of course, the contact of the constituents may be conducted plural times.

The catalyst component of the present invention thus prepared by mutually contacting the constituents (1) to (3) becomes more useful in the polymerization or copolymerization of olefins usually by further combining it with a promotor-like catalyst component. In this case, any promotor-like catalyst components may by used each alone or in combination of two or more as long as the object of the present invention and the performance of the catalyst component of the present invention are not impaired. But typically as one known well in this industry there may be used the following modified organoaluminum compound. Modified Organoaluminum Compound [constituent (4)]

Modified organoaluminum compounds employable in the present invention are the reaction products of organoaluminum compounds and water, each containing in the molecule 1 to 100, preferably 1 to 50, Al-O-Al bonds. The reaction of an organoaluminum compound and water is performed usually in an inert hydrocarbon. As the inert hydrocarbon there may be used any of aliphatic, alicyclic and aromatic hydrocarbons such as pentane, hexane, heptane, cyclohexane, methylcyclohexane, benzene, toluene and xylene, with aliphatic and aromatic hydrocarbons being preferred.

As the organoaluminum compound for use in the preparation of the modified organoaluminum compound there may be used any of compounds represented by the general formula RₐAlX₃₋ₐ where R is a hydrocarbon group such as an alkyl, alkenyl, aryl or aralkyl group having 1 to 18, preferable 1 to 12, carbon atoms, X is a hydrogen atom or a halogen atom, and a is an integer in the range of 1≦a≦3. Particularly, trialkylaluminum compounds are preferred, in which the alkyl group may be any of methyl, ethyl, propyl, isopropyl, butyl, isobutyl, pentyl, hexyl, octyl, decyl and dodecyl, with methyl being particularly preferred.

The reaction ratio of water and the organoaluminum compound (H₂O/Al mole ratio) is in the range from 0.25/1 to 1.2/1, preferably 0.5/1 to 1/1. The reaction temperature is usually in the range of -70° to 100°C, preferably -20° to 20°C, and a suitable reaction time is selected usually in the range of 5 minutes to 24 hours, preferably 10 minutes to 5 hours. As water for use in the reaction there may be used not only the ordinary water but also water of crystallization contained, for example, in copper sulfate hydrate or aluminum sulfate hydrate.

As typical examples of the modified organoaluminum compounds are mentioned compounds called aluminoxanes, among which methylaluminoxane is preferred.

According to the present invention, an olefin or olefins are homopolymerized or copolymerized in the presence of a catalyst comprising the catalyst component of the present invention described above and a promotor-like catalyst component typified by the modified organoaluminum compound [constituent (4)]. In this case, the catalyst component and the modified organoaluminum compound may be fed into the polymerization reaction system separately or after mixing or contacting.

As the method for mixing or contacting the catalyst component of the invention and the modified organoaluminum compound beforehand with each other there is included not only a method wherein the catalyst component resulting from mutual contact of constituents (1) to (3) and the modified organoaluminum compound are contacted or mixed together but also a method wherein the constituents (1) to (4) are contacted with one another.

It is optional in what order the components (1) to (4) are to be contacted with one another. Examples of suitable contacting orders include (1) → (2) → (3) →(4); (1) → (2) → (4) → (3); (1) → (3) → (2) → (4); (1) → (3) → (4) → (2); (1) → (4) → (2) → (3); (1) → (4) → (3) → (2); (2) → (1) → (3) → (4); (2) → (1) → (4) → (3); (2) → (3) → (1) → (4); (2) → (3) → (4) → (1); (2) → (4) → (1) → (3); (2) → (4) → (3) → (1); (3) → (1) → (2) → (4); (3) → (1) → (4) → (2); (3) → (2) → (1) → (4); (3) → (2) → (4) → (1); (3) → (4) → (1) → (2); (3) → (4) → (2) → (1); (4) → (1) → (2) → (3); (4) → (1) → (3) → (2); (4) → (2) → (1) → (3); (4) → (2) → (3) → (1); (4) → (3) → (1) → (2); and (4) → (3) → (2) → (1).

Of course, these constituents may be added in an appropriately divided manner. Other examples of contacting methods involve a method wherein the constituents (1), (2) (3) and (4) are contacted together simultaneously, a method wherein the contact reaction product of (1) and (2) is contacted with the contact reaction product of (3) and (4), and a method wherein the contact reaction product of (1), (2) and (3) is contacted with (4), of which the last method is most preferred.

It is also optional under what conditions the constituents are to be contacted with one another. But usually there may be adopted a method wherein the constituents (1), (2), (3) and (4) are contacted at a temperature of usually -100°C to 200°C, preferably -50°C to 100°C, for 30 minutes to 50 hours, preferably 2 to 24 hours, usually in an inert atmosphere such as nitrogen or argon and in the presence of an inert hydrocarbon solvent such as heptane, hexane, benzene, toluene, or xylene.

In the case where the constituents are contacted in an inert hydrocarbon solvent, the resulting catalyst may be used in the polymerization in the state of solution directly after completion of all the contact reactions. Alternatively and if possible, the catalyst may be once withdrawn as a solid catalyst through precipitation, drying, or any other suitable means and thereafter used in the polymerization. Of course, each contact reaction may be performed more than once.

The catalyst component, the promotor-like like catalyst component, or the resulting catalyst, may be supported before use on an inorganic carrier typified by alumina and silica and/or a particulate polymer carrier. In any case, a suitable ratio of the catalyst component and the modified organoaluminum compound is selected so that the atomic ratio of aluminum in the modified organoaluminum compound to the transition metal in the catalyst component is in the range of from 1 to 100,000, preferably 5 to 1,000, more preferably 10 to 500.

As a suitable combination of constituents (1) to (4) in the catalyst according to the present invention there is mentioned a combination of as constituent (1) a tetraalkylzirconium compound such as tetramethylzirconium or a tetraaralkylzirconium compound such as tetrabenzylzirconium, as constituent (2) a metal hydride such as aluminum hydride, iso-butylaluminum hydride, or sodium borohydride, as constituent (3) indene or an indene derivative such as methyl indene or trimethylsilylindene, cyclopentadiene or a cyclopentadiene derivative such as methylcyclopentadiene, dimethylcyclopentadiene, trimethylcyclopentadiene, or trimethylsilylcyclopentadiene, a compound with an indene derivative or cyclopentadiene derivative such as bisindenylethane or isopropylbiscyclopentadiene bonded through an alkylene group, or a compound of the foregoing general A_{L}SiR_{4-L} such as dimethylsilylbiscyclopentadiene, and as constituent (4) methylaluminoxane.

As another suitable combination is mentioned a combination of as constituent (1) a tetraalkyltitanium compound such as tetramethyltitanium, a tetraalkoxytitanium compound such as tetra-n-butoxytitanium or tetraisopropoxytitanium or a tetraaralkyltitanium compound such as tetrabenzyltitanium, as constituent (2) a metal hydride such as aluminum hydride, iso-butylaluminum hydride, or sodium borohydride, as constituent (3) indene or an indene derivative such as methylindene or trimethylsilylindene, cyclopentadiene or a derivative thereof such as methylcyclopentadiene, dimethylcyclopentadiene, trimethylcyclopentadiene, or trimethylsilylcyclopentadiene, a compound with an indene derivative or cyclopentadiene derivative such as bisindenylethane or isopropylbiscyclopentadiene bonded through an alkylene group, or a compound of the foregoing general formula A_{L}SiR_{4-L} such as dimethylsilylbiscyclopentadiene, and as constituent (4) methylaluminoxane.

As a further suitable combination is mentioned a combination of as constituent (1) a tetraalkoxyzirconium compound such as tetra-n-butoxyzirconium or tetraisopropoxyzirconium, as constituent (2) a metal hydride such as aluminum hydride, iso-butylaluminum hydride, or sodium borohydride, as constituent (3) indene or a derivative thereof such as methylindene or trimethylsilylindene, cyclopentadiene or a derivative thereof such as methylcyclopentadiene, dimethylcyclopentadiene, trimethylcyclopentadiene, or trimethylsilylcyclopentadiene, a compound with an indene derivative or cyclopentadiene derivative such as bisindenylethane or isopropylbiscyclopentadiene bonded through an alkylene group, or a compound of the foregoing general formula A_{L}SiR_{4-L} such as dimethylsilylbiscyclopentadiene, and as constituent (4) methylaluminoxane.

As a further suitable combination is mentioned a combination of as constituent (1) a zirconium chloride compound such as zirconium tetrachloride, zirconium trichloride, isopropoxyzirconium trichloride or benzylzirconium trichloride, as constituent (2) a metalhydride such as aluminum hydride, iso-butylaluminum hydride, or sodium borohydride, as constituent (3) indene or an indene derivative such as methylindene or trimethylsilylindene, cyclopentadiene or a derivative thereof such as methylcyclopentadiene, dimethylcyclopentadiene, trimethylcyclopentadiene, or trimethylsilylcyclopentadiene, a compound with an indene derivative or cyclopentadiene derivative such as bisindenylethane or isopropylbiscyclopentadiene bonded through an alkylene group, or a compound of the foregoing general formula A_{L}SiR_{4-L} such as dimethylsilylbiscyclopentadiene, and as constituent (4) methylaluminoxane.

As a further suitable combination is mentioned a combination of as constituent (1) a tetraalkoxyzirconium compound such as tetra-n-butoxyzirconium or tetraisopropoxyzirconium, as constituent (2) a metal hydride such as aluminum hydride, iso-butylaluminum hydride, or sodium borohydride, as constituent (3) indene or an indene derivative such as methylindene or trimethylsilylindene, cyclopentadiene or a cyclopentadiene derivative such as methylcyclopentadiene, dimethylcyclopentadiene, trimethylcyclopentadiene, or trimethylsilylcyclopentadiene, a compound with an indene derivative or cyclopentadiene derivative such as bisindenylethane or isopropylbiscyclopentadiene bonded through a alkylene group, or a compound of the foregoing general formula A_{L}SiR_{4-L} such as dimethylsilylbiscyclopentadiene, and as constituent (4) methylaluminoxane.

As a further suitable combination is mentioned a combination of as constituent (1) a tetraalkylzirconium compound such as tetramethylzirconium or a tetraaralkylzirconium compound such as tetrabenzylzirconium, as constituent (2) a metal hydride such as aluminum hydride, is-butylaluminum hydride, or sodium borohydride, as constituent (3) indene or an indene derivative such as methylindene or trimethylsilylindene, cyclopentadiene or a cyclopentadiene derivative such as methylcyclopentadiene, dimethylcyclopentadiene, trimethylcyclopentadiene, or trimethylsilylcyclopentadiene, a compound with an indene derivative or cyclopentadiene derivative such as bisindenylethane or isopropylbiscyclopentadiene bonded through an alkylene group, or a compound of the foregoing general formula A_{L}SiR_{4-L}, and as constituent (4) methylaluminoxane.

In the olefins referred to herein there are included α-olefins, cyclic olefins, dienes, trienes and styrene analogs. Examples of α-olefins include those having 2 to 12, preferably 2 to 8, carbon atoms. More concrete examples are ethylene, propylene, butene-1, hexene-1 and 4-methylpentene-1. An α-olefin can be homopolymerized using the catalyst component of the present invention and it is also possible to copolymerize two or more kinds of α-olefins using such catalyst component. The copolymerization may be any of alternating copolymerization, random copolymerization and block copolymerization.

In the copolymerization of α-olefins there are included the case where ethylene and an α-olefin having 3 to 12, preferably 3 to 8, carbon atoms are copolymerized, such as ethylene/propylene, ethylene/butene-1, ethylene/hexene-1 and ethylene/4-methylpentene-1 and the case where propylene and an α-olefin having 3 to 12, preferably 3 to 8, carbon atoms, such as propylene/butene-1, propylene/4-methylpentene-1, propylene/4-methylbutene-1, propylene/hexene-1 and propylene/octene-1. In the case of copolymerizing ethylene or propylene with another α-olefin, the amount of such α-olefin may be selected optionally on condition that it does not exceed 90 mol% of the total monomer quantity. Generally, however, in the case of an ethylene copolymer, the amount of such another α-olefin is not larger than 40 mol%, preferably not larger than 30 mol%, more preferably not larger than 20 mol%, while in the case of a propylene copolymer, the amount of such another α-olefin is selected in the range of 1-90 mol%, preferably 5-90 mol%, more preferably 10-70 mol%.

Examples of cyclic olefins employable in the invention are those having 3 to 24, preferably 3 to 18, carbon atoms, including cyclopentene, cyclobutene, cyclohexene, 3-methylcyclohexene, cyclooctene, cyclodecene, tetracyclodecene, octacyclodecene, norbornene, 5-methyl-2-norbornene, 5-ethyl-2-norbornene, 5-isobutyl-2-norbornene, 5,6-dimethyl-2-norbornene, and 5,5,6-trimethyl-1-norbornene. Usually, a cyclic olefin is copolymerized with the foregoing α-olefin and in this case the amount of the cyclic olefin is not larger than 50 mol%, usually in the range of 1-50 mol%, preferably 2-50 mol%, relative to the copolymer.

Dienes and trienes employable in the present invention are polyenes having 4 to 26, preferably 6 to 26, carbon atoms.

Examples are 1,3-pentadiene, 1,4-pentadiene, 1,3-hexadiene, 1,4-hexadiene, 1,5-hexadiene, 1,3-cyclohexadiene, 1,4-cyclohexadiene, 1,9-decadiene, 1,13-tetradecadiene, 2,6-dimethyl-1,5-heptadiene, 2-methyl-2,7-octadiene, 2,7-dimethyl-2,6-octadiene, 2,3-dimethylbutadiene, ethylidene norbornene, dicyclopentadiene, isoprene, 1,3,7-octatriene, and 1,5,9-decatriene. In the case of using a chain diene or triene in the present invention, it is usually copolymerized with the foregoing α-olefin, and the content of chain diene and/or triene in the copolymer is usually in the range of 0.1 to 50 mol%, preferably 0.2 to 10 mol%.

Styrene analogs employable in the present invention are styrene and styrene derivatives. As examples of such derivatives there are mentioned t-butylstyrene, α-methylstyrene, divinylbenzene, 1,1-diphenylethylene, N,N-dimethyl-p-aminoethylstyrene, and N,N-diethyl-p-aminoethylstyrene.

The catalyst component of the present invention is also suitable for use in further polymerizing a homopolymer or a copolymer of olefin(s) with a polar monomer for the purpose of modification of the homopolymer or copolymer. As examples of such polar monomer there are mentioned unsaturated carboxylic acid esters such as methyl acrylate, methyl methacrylate, butyl methacrylate, dimethyl maleate, diethyl maleate, monomethyl maleatae, diethyl fumarate, and dimethyl itaconate. The polar monomer content of the copolymer thus modified is usually in the range of 0.1 to 10 mol%, preferably 0.2 to 2 mol%.

The polymerization reaction may be carried out in the form of slurry polymerization, solution polymerization or gas-phase polymerization in the presence of the catalyst component and promotor component described above. Particularly, a slurry polymerization or a gas-phase polymerization is preferred. Olefin(s) is (are) polymerized preferably in a substantially oxygen- and water-free condition and in the presence or absence of an inert hydrocarbon solvent selected from aliphatic hydrocarbons such as hexane and heptane, aromatic hydrocarbons such as benzene, toluene and xylene and alicyclic hydrocarbons such as cyclohexane and methylcyclohexane. Conditions for the polymerization preferably involve a temperature in the range of 20° to 200°C, preferably 50° to 100°C, a pressure in the range of from atmospheric pressure to 70 kg/cm²G, preferably of from atmospheric pressure to 20 kg/cm²G, and a polymerization time in the range of from 5 minutes to 10 hours, preferably 5 minutes to 5 hours.

The molecular weight of the polymer to be prepared can be adjusted to some extent by changing polymerization conditions such as polymerization temperature and catalyst mol ratio, but the addition of hydrogen to the polymerization reaction system is more effective for this purpose. The process of the present invention is also applicable to a multi-stage polymerization of two or more stages involving different polymerization conditions such as different hydrogen concentrations and different polymerization temperatures.

### [Examples]

The following working and comparative examples are given to illustrate the present invention more concretely. Prior to description of those examples, reference will first be made below to the preparation of modified organoaluminum compound and catalyst component used in the working and comparative examples.

### Preparation of Modified Organoaluminum Compound (Methylaluminoxane)

13 g of copper sulfate pentahydrate were placed in a three-necked 300 ml flask equipped with an electromagnetic stirrer and were suspended using 50 ml of toluene. Then, 150 ml of a trimethylaluminum solution having a concentration of 1 mmol/ml were added dropwise into the suspension at 0°C over a period of 2 hours. Thereafter, the temperature was raised to 25°C and reaction was allowed to take place at that temperature for 24 hours. Subsequently, the reaction mixture was treated to remove toluene from the liquid containing the reaction product, leaving 4 g of methylaluminoxane (MAO) in the form of white crystals.

The following methods were adopted to determine the physical properties of the polymers obtained in the following working and comparative examples.

### Melt Flow Rate (MFR)

Determined at 190°C under a load of 2.16 kg according to ASTM D 1238-57T.

### Density

Determined according to ASTM D 1505-68.

### Determination of Melting Point using Differential Scanning Calorimeter (DSC)

Using a melting point measuring device Model DSC-20 (a product of Seiko Denshi K.K.), a polymer sample (5 mg) is held at 180°C for 3 minutes, then cooled to 0°C at a rate of 10°C/min, and after holding the sample at 0°C for 10 minutes, the temperature is raised at a rate of 10°C/min to determine the melting point.

### Mw/Mn

Determined using a Type 150C GPC device (a product of Water Co.), a column of GMH-6 (a product of Toyo Soda Manufacturing Co.), a solvent of o-dichlorobenzene, and under the conditions of temperature 135°C, flow rate 1.0 ml/min.

### Determination by Temperature Rising Elusion Fractionation ("TREF" hereinafter)

The resulting olefin (co)polymer is dissolved in o-dichlorobenzene, followed by cooling and formation of a polymer layer in diatomaceous earth, then the temperature is raised continuously and eluted component is detected in a continuous manner.

### Determining Degree of Branching

Using an NMR device (a product of Japan Electron Optics Laboratory Co., Ltd.), ¹³C-NMR, solvent ODCB/deuterated benzene, and a measurement temperature of 120°C, the concentration of butene-1 (pc./1000C) is determined as the degree of branching.

### Example 1

200 g of sea sand which had been washed with an acid and then heat-treated at 300°C were fed into a 2-liter autoclave and dried thoroughly. Tetrabutoxyzirconium (0.11 g), diisobutylaluminum hydride (0.69 ml) and 1,2-bisindenylethane (0.1 g) were dissolved in 13 ml of toluene to afford a catalyst component solution. Then, a solution of methylaluminoxane in toluene [Al/Zr = 100 (molar ratio)] was added into 0.5 ml of the catalyst component solution and stirring was performed at room temperature for 30 minutes to give a solution of a desired catalyst. This catalyst solution was then introduced into the 2-liter autoclave and polymerization was conducted at 60°C for 2 hours while introducing a gaseous mixture of ethylene and 1-butene (butene/ethylene = 0.2) continuously to maintain the total pressure at 9 atm. Catalytic efficiency was 150 kg/g.Zr, density of 0.9208 g/cm³, MFR 3.0 g/10 min (190°C), melting point 112.0°C, and Mw/Mn 7.5. From a sharp peak of TREF it turned out that the composition distribution was very narrow.

### Example 2

200 g of sea sand which had been washed with an acid and then heat-treated at 300°C were fed into a 2-liter autoclave and dried thoroughly. Tetrabutoxyzirconium (0.22 g), aluminum hydride (0.09 g) and indene (0.23 ml) were suspended in 13 ml of toluene to afford a catalyst component suspension. Then, a solution of methylaluminoxane in toluene [Al/Zr = 100 (molar ratio)] was added into 0.5 ml of the catalyst component suspension and stirring was performed at room temperature for 30 minutes to give a solution of a desired catalyst. This catalyst solution was then introduced into the 2-liter autoclave and polymerization was conducted at 60°C for 2 hours while introducing a gaseous mixture of ethylene and 1-butene (butene/ethylene = 0.2) continuously to maintain the total pressure at 9 atm. Catalytic efficiency was 90 kg/g.Zr, density was 0.9210 g/cm³, MFR 1.0 g/10 min (190°C), melting point 113.2°C, and Mw/Mn 9.0.

### Example 3

200 g of sea sand which had been washed with an acid and then heat-treated at 300°C were fed into a 2-liter autoclave and dried thoroughly.
Tributoxymonochlorozirconium (0.26 g), lithium aluminum hydride (0.10 g) and indene (0.28 ml) were suspended in 17 ml of toluene to afford a catalyst component suspension. Then, a solution of methylaluminoxane in toluene [Al/Zr = 100 (molar ratio)] was added into 0.5 ml of the catalyst component suspension and stirring was performed at room temperature for 30 minutes to give a solution of a desired catalyst. Then, this catalyst solution was introduced into the 2-liter autoclave and polymerization was conducted at 60°C for 2 hours while introducing a gaseous mixture of ethylene and 1-butene (butene/ethylene = 0.2) continuously to maintain the total pressure at 9 atm. Catalytic efficiency was 15 kg/g.Zr, density was 0.9280 g/cm³ , MFR 1.2 g/10 min (190°C), melting point 113.7°C, and Mw/Mn 9.6.

### Example 4

200 g of sea sand which had been washed with an acid and then heat-treated at 300°C were introduced into a 2-liter autoclave and dried thoroughly.
Dibutoxydichlorozirconium (0.26 g), lithium aluminum triethoxy hydride (0.80 g) and indene (0.28 ml) were dissolved in 17 ml of toluene to prepare a catalyst component solution. Then, a solution of methylaluminoxane in toluene [Al/Zr = 100 (molar ratio)] was added into 0.5 ml of the catalyst component solution and stirring was performed at room temperature for 30 minutes to afford a solution of a desired catalyst. This catalyst solution was then introduced into the 2-liter autoclave and polymerization was conducted at 60°C for 2 hours while introducing a gaseous mixture of ethylene and 1-butene (butene/ethylene = 0.2) continuously to maintain the total pressure at 9 atm. Catalytic efficiency was 25 kg/g.Zr, density was 0.9201 g/cm³, MFR 0.3 g/10 min (190°C), melting point 113.3°C, and Mw/Mn 6.5.

### Example 5

200 g of sea sand which had been washed with an acid and then heat-treated at 300°C were introduced into a 2-liter autoclave and dried thoroughly. Tetrabutoxytitanium (0.13 g), lithium aluminum tri-tert butoxy hydride (0.60 g) and indene (0.35 ml) were dissolved in 17 ml of toluene to prepare a catalyst component solution. Then, a solution of methylaluminoxane in toluene [Al/Ti = 1000 (molar ratio)] was added into 0.5 ml of the catalyst component solution and stirring was performed at room temperature for 30 minutes to afford a solution of a desired catalyst. This catalyst solution was then introduced into the 2-liter autoclave and polymerization was conducted at 60°C for 2 hours while introducing a gaseous mixture of ethylene and 1-butene (butene/ethylene = 0.2) continuously to maintain the total pressure at 9 atm. Catalytic efficiency was 30 kg/g.Ti, density was 0.9220 g/cm³, MFR 0.9 g/10 min (190°C), melting point 114.5°C, and Mw/Mn 8.2.

### Example 6

200 g of sea sand which had been washed with an acid and then heat-treated at 300°C were introduced into a 2-liter autoclave and dried thoroughly. Tetrapropoxyhafnium (0.23 g), diisobutylaluminum hydride (0.38 g) and indene (0.23 ml) were dissolved in 25 ml of toluene to prepare a catalyst component solution. Then, a solution of methylaluminoxane in toluene [Al/Hf = 500 (molar ratio)] was added into the catalyst component solution and stirring was performed at room temperature for 30 minutes to afford a solution of a desired catalyst. This catalyst solution was then introduced into the 2-liter autoclave and polymerization was conducted at 60°C for 2 hours while introducing a gaseous mixture of ethylene and 1-butene (butene/ethylene = 0.2) to maintain the total pressure at 9 atm. Catalytic efficiency was 30 kg/g.Hf, density was 0.9220 g/cm³ , MFR 0.9 g/10 min (190°C), melting point 115.2°C, and Mw/Mn 7.6.

### Example 7

500 ml of purified toluene was fed into a thoroughly dried 2-liter autoclave. Tetrabutoxyzirconium (0.11 g), diisobutylaluminum hydride (0.69 ml) and 1,2,4-trimethylcyclopentadiene (0.31 ml) were dissolved in 13 ml of toluene to prepare a catalyst component solution. Then, a solution of methylaluminoxane in toluene [Al/Zr = 600 (molar ratio)] was added into 0.5 ml of the catalyst component solution and stirring was performed at room temperature for 30 minutes to afford a solution of a desired catalyst. This catalyst solution was then introduced into the 2-liter autoclave and polymerization was carried out at 60°C for 2 hours while introducing propylene gas continuously to maintain the total pressure at 9 atm. Catalytic efficiency was 150 kg/g.Zr, Mw was 15,000 and Mw/Mn 3.8.

### Example 8

200 g of sea sand which had been washed with an acid and then heat-treated at 300°C were introduced into a 2-liter autoclave and dried thoroughly. Tetrapropoxyzirconium (0.29 g), catechol borane (0.12 g) and 1,3-dimethylcyclopentadiene (0.08 g) were dissolved in 40 ml of toluene. Then, a solution of methylaluminoxane in toluene [Al/Zr = 100 (molar ratio)] was added into 0.5 ml of the resulting solution and stirring was performed at room temperature for 30 minutes. The resulting solution was then charged into the 2-liter autoclave and polymerization was carried out at 60°C for 2 hours while introducing a gaseous mixture of ethylene and 1-butene (butene/ethylene = 0.2) continuously to maintain the total pressure at 9 atm. Catalytic efficiency was 40 kg/g.Zr, density was 0.9210 g/cm³ , MFR 0.6 g/10 min (190°C), melting point 112.7°C, and Mw/Mn 5.0.

### Example 9

200 g of sea sand which had been washed with an acid and then heat-treated at 300°C were fed into a 2-liter autoclave and dried thoroughly. Tetrapropoxyzirconium (0.29 g), sodium borohydride (0.05 g) and 1,3-dimethylcyclopentadiene (0.08 g) were suspended in 40 ml of toluene. Then, a solution of methylaluminoxane in toluene [Al/Zr = 100 (molar ratio)] was added into 0.5 ml of the resulting suspension and stirring was performed at room temperature for 30 minutes. The resulting solution was then charged into the 2-liter autoclave and polymerization was carried out at 60°C for 2 hours while introducing ethylene gas continuously to maintain the total pressure at 9 atm. Catalytic efficiency was 20 kg/g.Zr, density was 0.9640 g/cm³ , MFR 0.6 g/10 min (190°C), melting point 136.2°C, and Mw/Mn 4.9.

### Example 10

200 g of sea sand which had been washed with an acid and then heat-treated at 300°C were fed into a 2-liter autoclave and dried thoroughly. Tetrabenzylzirconium (0.29 g), zinc borohydride (0.04 g) and indene (0.41 ml) were suspended in 40 ml of toluene. Then, a solution of methylaluminoxane in toluene [Al/Zr = 100 (molar ratio)] was added into the resulting suspension and stirring was performed at room temperature for 30 minutes. The resulting solution was introduced into the 2-liter autoclave and polymerization was carried out at 60°C for 2 hours while introducing a gaseous mixture of ethylene and 1-butene (butene/ethylene = 0.2) continuously to maintain the total pressure at 9 atm. Catalytic efficiency was 15 kg/g.Zr, density was 0.9244 g/cm³, MFR 0.9 g/10 min (190°C), melting point 113.2°C, and Mw/Mn 7.5.

### Example 11

200 g of sea sand which had been washed with an acid and then heat-treated at 300°C were fed into a 2-liter autoclave and dried thoroughly. Tetrachlorozirconium (0.19 g), potassium tri-isobutyl borohydride (8.2 x 10⁻⁵ mol) and indene (0.41 ml) were dissolved in 40 ml of toluene. Then, a solution of methylaluminoxane in toluene [Al/Zr = 100 (molar ratio)] was added into the resulting solution and stirring was performed at room temperature for 30 minutes. The resulting solution was charged into the 2-liter autoclave and polymerization was carried out at 60°C for 2 hours while introducing a gaseous mixture of ethylene and 1-butene (butene/ethylene = 0.2) continuously to maintain the total pressure at 9 atm. Catalytic efficiency was 15 kg/g.Zr, density was 0.9240 g/cm³ , MFR 0.9 g/10 min (190°C), melting point 113.2°C, and Mw/Mn 4.5.

### Comparative Example 1

Polymerization was conducted in the same way as in Example 3 except that diethylaluminum chloride (0.28 ml) was used in place of lithium aluminum hydride. Catalytic efficiency was 10 kg/g.Zr, density was 0.9208 g/cm³ , MFR 0.3 g/10 min (190°C), melting point 112.3°C, and Mw/Mn 4.3.

### Comparative Example 2

Polymerization was conducted in the same way as in Example 6 except that triethylaluminum (0.38 ml) was used in place of diisobutylaluminum hydride. Catalytic efficiency was 20 kg/g.Hf, density was 0.9211 g/cm³ , MFR 0.4 g/10 min (190°C), melting point 114.5°C, and Mw/Mn 6.3.

### Comparative Example 3

Polymerization was conducted in the same way as in Example 1 except that triisobutylaluminum (0.69 ml) was used in place of diisobutylaluminum hydride. Catalytic efficiency was 70 kg/g.Zr, density was 0.9200 g/cm³, MFR 4.0 g/10 min (190°C), melting point 113.2°C, and Mw/Mn 7.6.

### Comparative Example 4

Polymerization was conducted in the same way as in Example 1 except that diisobutylaluminum hydride was not used. Polymer was not obtained.

### Comparative Example 5

Polymerization was conducted in the same way as in Example 1 except that bisindenylethane was not used. Catalytic efficiency was 0.001 kg/g.Zr. From a very broad peak of TREF it turned out that the composition distribution was wide.

## Claims

1. A catalyst component for the polymerization of olefins, said catalyst component being prepared by contacting at least the following constituents (1), (2) and (3) with one another:
(1) a compound represented by the general formula MeRₚ(OR')_{q}X_{4-p-q} wherein R and R' are each independently a hydrocarbon group having 1 to 24 carbon atoms, X is a halogen atom, Me is Zr, Ti or Hf, p and q are each an integer in the ranges of 0 ≦ p ≦ 4 and 0 ≦ q ≦ 4, provided 0 ≦ p+q ≦ 4;
(2) at least one metal hydride compound selected from the group consisting of compounds represented by the following general formulas 1 to 3:
General formula 1: MeHₘR₃₋ₘ
General formula 2: Me'[MeHₚR_{q}(OR)_{4-p-q}]_{z} 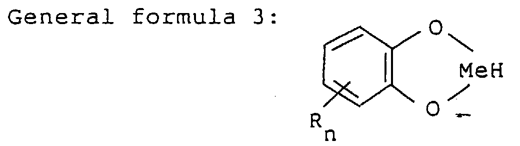
wherein R is a hydrocarbon group having 1 to 20 carbon atoms, Me is a Group IIIA element of the Periodic Table, Me' is a Group IA, IIA or IIB element in the Periodic Table of Elements, where two or more R groups exist in a molecule, they may be same or different, z is the valence of Me', and m, n, p and q are each an integer in the ranges of 1 ≦ m ≦ 3, 0 ≦ n ≦ 4, 1 ≦ p ≦ 4, 1 ≦ q ≦ 3, provided 1 ≦ p+q ≦ 4; and
(3) an organocyclic compound having two or more conjugated double bonds.

2. A catalyst component as set forth in Claim 1, wherein the component (3) is a cyclic hydrocarbon compound having at least one ring which contains 2 to 4 conjugated double bonds and having 4 to 24 carbon atoms in all.

3. A catalyst component as set forth in Claim 2, wherein the cyclic hydrocarbon compound is a compound having a substituted or unsubstituted cyclopentadienyl or indenyl group.

4. A catalyst component as set forth in Claim 2, wherein the component (3) is a compound represented by the following general formula:
A_{L}SiR_{4-L}
where A is a cyclic hydrocarbon group, R is hydrogen or a hydrocarbon residue having 1 to 24 carbon atoms, and L is an integer in the range of 1≦L≦4.

5. A catalyst component as set forth in any one of Claims 1 to 4, wherein the proportion of the component (2) to 1 mole of the component (1) is in the range of 0.01 to 1,000 moles.

6. A catalyst component as set forth in any one of Claims 1 to 5, wherein the proportion of the component (3) to 1 mole of the component (1) is in the range of 0.01 to 1,000 moles.

7. A catalyst component as set forth in any one of Claims 1 to 6, wherein the proportion of the component (2) to 1 mole of the component (1) is in the range of 0.1 to 100 moles.

8. A catalyst component as set forth in any one of Claims 1 to 7, wherein the proportion of the component (3) to 1 mole of the component (1) is in the range of 0.1 to 100 moles.

9. A catalyst for the polymerization of olefins, comprising the catalyst component defined in in any one of Claims 1 to 8 and modified organoaluminum compound containing an Al-O-Al bond.

10. A catalyst as set forth in Claim 9, wherein the modified organoaluminum compound is a compound having 1 to 50 Al-O-Al bonds in the molecule thereof prepared by the reaction of an organoaluminum compound and water.

11. A catalyst component as set forth in Claim 9 or Claim 10, wherein the atomic ratio of aluminum in the modified organoaluminum compound to the transition metal in the catalyst component is in the range of 1 to 100,000.

12. A process for preparing an olefin homopolymer or copolymer, characterized in that an olefin or olefins are polymerized in the presence of the catalyst defined in any one of Claims 9 to 11.

## Patentansprüche

1. Katalysatorkomponente für die Polymerisation von Olefinen, wobei diese Katalysatorkomponente dadurch hergestellt wird, daß man mindestens folgende Bestandteile (1), (2) und (3) miteinander in Kontakt bringt:
(1) eine Verbindung der allgemeinen Formel MeRₚ(OR')_{q}X_{4-p-q}, in der R und R' jeweils unabhängig eine Kohlenwasserstoffgruppe mit 1 bis 24 Kohlenstoffatomen sind, X ein Halogenatom, Me = Zr, Ti oder Hf und p und q jeweils eine ganze Zahl in den Bereichen von 0 ≤ p ≤ 4 und 0 ≤ q ≤ 4, mit der Maßgabe 0 ≤ p + q ≤ 4 bedeuten;
(2) mindestens eine Metallhydridverbindung, ausgewählt aus der Gruppe, bestehend aus Verbindungen der folgenden allgemeinen Formeln 1 bis 3:
allgemeine Formel 1: MeHₘR₃₋ₘ
allgemeine Formel 2: Me'[MeHₚR_{q}(OR)_{4-p-q}]_{z} 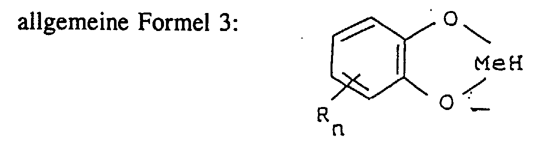
wobei R eine Kohlenwasserstoffgruppe mit 1 bis 20 Kohlenstoffatomen ist, Me ein Element der Gruppe IIIA des Periodischen Systems bedeutet, Me' ein Element der Gruppe IA, IIA oder IIB des Periodischen Systems ist, wenn zwei oder mehr R-Gruppen in einem Molekül existieren, können sie gleich oder verschieden sein, z die Wertigkeit von Me' ist, und m, n, p und q jeweils eine ganze Zahl in den Bereichen 1 ≤ m ≤ 3, 0 ≤ n ≤ 4, 1 ≤ p ≤ 4, 1 ≤ q ≤ 3, mit der Maßgabe 1 ≤ p + q ≤ 4 bedeuten; und
(3) eine organocyclische Verbindung mit zwei oder mehr konjugierten Doppelbindungen.

2. Katalysatorkomponente gemäß Anspruch 1, wobei die Komponente (3) eine cyclische Kohlenwasserstoffverbindung ist, die mindestens einen Ring aufweist, der 2 bis 4 konjugierte Doppelbindungen und insgesamt 4 bis 24 Kohlenstoffatome aufweist.

3. Katalysatorkomponente gemäß Anspruch 2, wobei die cyclische Kohlenwasserstoffverbindung eine Verbindung ist, die eine substituierte oder nicht-substituierte Cyclopentadienyl- oder Indenylgruppe aufweist.

4. Katalysatorkomponente gemäß Anspruch 2, wobei der Bestandteil (3) eine Verbindung der folgenden allgemeinen Formel ist:
A_{L}SiR_{4-L}
wobei A eine cyclische Kohlenwasserstoffgruppe, R Wasserstoff oder ein Kohlenwasserstoffrest mit 1 bis 24 Kohlenstoffatomen und L eine ganze Zahl im Bereich von ≤ L ≤ 4 ist.

5. Katalysatorkomponente gemäß einem der Ansprüche 1 bis 4, wobei das Verhältnis des Bestandteils (2) zu 1 Mol des Bestandteils (1) im Bereich von 0,01 bis 1 000 Mol liegt.

6. Katalysatorkomponente gemäß einem der Ansprüche 1 bis 5, wobei das Verhältnis des Bestandteils (3) zu 1 Mol des Bestandteils (1) im Bereich von 0,01 bis 1 000 Mol liegt.

7. Katalysatorkomponente gemäß einem der Ansprüche 1 bis 6, wobei das Verhältnis des Bestandteils (2) zu 1 Mol des Bestandteils (1) im Bereich von 0,1 bis 100 Mol liegt.

8. Katalysatorkomponente gemäß einem der Ansprüche 1 bis 7, wobei das Verhältnis des Bestandteils (3) zu 1 Mol des Bestandteils (1) im Bereich von 0,1 bis 100 Mol liegt.

9. Katalysator zur Polymerisation von Olefinen, umfassend die Katalysatorkomponente gemäß einem der Ansprüche 1 bis 8 und eine modifizierte Organoaluminiumverbindung, enthaltend eine Al-O-Al-Bindung.

10. Katalysator gemäß Anspruch 9, wobei die modifizierte Organoaluminiumverbindung eine Verbindung mit 1 bis 50 Al-O-Al-Bindungen im Molekül ist, die durch Umsetzung einer Organoaluminiumverbindung und Wasser hergestellt wurde.

11. Katalysatorkomponente gemäß Anspruch 9 oder Anspruch 10, wobei das Atomverhältnis von Aluminium in der modifizierten Organoaluminiumverbindung zum Übergangsmetall in der Katalysatorkomponente im Bereich von 1 bis 100 000 liegt.

12. Verfahren zur Herstellung eines Olefinhomopolymers oder -copolymers, dadurch gekennzeichnet, daß ein Olefin oder Olefine in Anwesenheit eines Katalysators, wie in einem der Ansprüche 9 bis 11 definiert, polymerisiert werden.

## Revendications

1. Composant catalyseur pour la polymérisation d'oléfines, ledit composant catalyseur étant préparé par mise en contact d'au moins les constituants suivants (1), (2) et (3) entre :
(1) un composé représenté par la formule générale MeR_{P}(OR')_{q}X_{4-p-q} dans laquelle R et R' sont chacun indépendamment un groupe hydrocarbure ayant 1 à 24 atomes de carbone, X est un atome d'halogène, Me est Zr, Ti ou Hf, p et q sont chacun un nombre entier dans les plages de 0 ≦ p < 4 et 0 ≦ q ≦ 4, à condition que 0 ≦ p + q ≦ 4 ;
(2) au moins un composé d'hydrure métallique choisi dans le groupe constitué par les composés représentés par les formules générales suivantes 1 à 3 :
Formule générale 1 : MeHₘR₃₋ₘ
Formule générale 2 : Me' [MeHₚR_{q}(OR)_{4-p-q}]_{z} 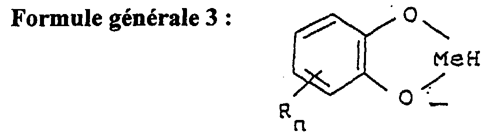
dans laquelle R est un groupe hydrocarbure ayant 1 à 20 atomes de carbone, Me est un élément du groupe IIIA de la classification périodique des éléments, Me' est un élément du groupe IA, IIA ou IIB de la classsification périodique des éléments, dans lesquels 2 ou plus de deux groupes R existent dans une molécule qui peuvent être identiques ou différents, z est la valence de Me' et m, n, p et q sont chacun un nombre entier dans les plages de 1 ≧ m ≦ 3, 0 ≦ n ≦ 4, 1≦ p ≦4, 1 ≦ q ≦ 3, à condition que 1 ≦ p+q ≦ 4; et
(3) un composé organo cyclique ayant deux ou plus de deux liaisons doubles conjugées.

2. Composant catalyseur selon la revendication 1, dans lequel le composant 3 est un composé hydrocarbure cyclique ayant au moins un cycle qui contient 2 à 4 doubles liaisons conjuguées et 4 à 24 atomes de carbone en tout.

3. Composant catalyseur selon la revendication 2, dans lequel le composé hydrocarbure cyclique est un composé ayant un groupe indényle ou cyclopentadiényle substitué ou non substitué.

4. Composant catalyseur selon la revendication 2, dans lequel le composant 3 est un composé représenté par la formule générale suivante :
A_{L}SiR_{4-L}
dans laquelle A est un hydrocarbure cyclique, R est l'hydrogène ou un résidu hydrocarboné ayant 1 à 24 atomes de carbone, et L est un nombre entier dans la plage de 1 ≦ L ≦ 4.

5. Composant catalyseur selon l'une quelconque des revendications 1 à 4, dans lequel la proportion du composant 2 pour une mole de composant 1 se situe dans la plage de 0,01 à 1.000 moles.

6. Composant catalyseur selon l'une quelconque des revendications 1 à 5, dans lequel la proportion du composant 3 pour une mole du composant 1 se situe dans la plage de 0,01 à 1.000 moles.

7. Composant catalyseur selon l'une quelconque des revendications 1 à 6, dans lequel la proportion du composant 2 pour une mole du composant 1 se situe dans la plage de 0,1 à 100 moles.

8. Composant catalyseur selon l'une quelconque des revendications 1 à 7, dans lequel la proportion du composant 3 pour une mole du composant 1 se situe dans la plage de 0,1 à 100 moles.

9. Catalyseur pour la polymérisation d'oléfines comprenant le composant catalyseur défini dans l'une quelconque des revendications 1 à 8 et un composé organo alumunium modifié contenant une liaison Al-O-Al.

10. Catalyseur selon la revendication 9, dans lequel le composé organo aluminium modifié est un composé ayant une à 50 liaisons Al-O-Al dans sa molécule préparé par la réaction d'un composé organo aluminium et d'eau.

11. Composant catalyseur selon la revendication 9 ou la revendication 10, dans lequel le rapport atomique entre l'aluminium dans le composé organo aluminium modifié et le métal de transition dans le composant catalyseur se situe dans la plage de 1 à 100.000.

12. Procédé pour la préparation d'un homopolymère d'oléfines ou copolymère caractérisé en ce qu'une oléfine ou des oléfines sont polymérisées en présence du catalyseur défini dans l'une quelconque des revendications 9 à 11.
